# EUROPÄISCHE PATENTSCHRIFT

(11) **EP 3 774 266 B1**
(45) Veröffentlichungstag und Bekanntmachung des Hinweises auf die Patenterteilung: **15.02.2023**
(21) Anmeldenummer: 19717288.5
(22) Anmeldetag: 09.04.2019
(51) Int. Cl.: B29C 45/37, F16G 13/00, F16G 13/16, G09F 3/03, H02G 11/00, H02G 3/04, B29L 31/12, B29C 37/00

(54) **MARKIERUNG AN SPRITZGUSSTEILEN FÜR ENERGIEFÜHRUNGSKETTEN**
MARKING ON INJECTION MOULDED PARTS FOR CABLE CARRIERS
MARQUAGE SUR PIÈCES MOULÉES PAR INJECTION POUR CHAÎNES DE TRANSPORT D'ÉNERGIE

(30) Priorität: 12.04.2018 DE 202018102000 U
(43) Veröffentlichungstag der Anmeldung: 17.02.2021
(73) Patentinhaber: Igus GmbH, 51147 Köln (DE)
(72) Erfinder: BLASE, Frank, 51429 Bergisch Gladbach (DE)
(74) Vertreter: Lippert Stachow Patentanwälte Rechtsanwälte
(86) Internationale Anmeldenummer: PCT/EP2019/058926
(87) Internationale Veröffentlichungsnummer: WO 2019/197392

(56) Entgegenhaltungen:
- EP-A1- 3 305 498
- WO-A2-98/55956
- DE-A1-102008 046 700
- DE-A1-102013 223 567
- DE-A1-102014 220 002
- DE-B4-112004 000 584
- ODA R: "Resin molded product for component of motor vehicle, has code symbol comprises plane part, convex part protruded from code symbol formation surface, plane part formed with mirror surface, and outer surface arranged on convex part", WPI / 2017 CLARIVATE ANALYTICS,, Bd. 2016, Nr. 37, 26. Mai 2016 (2016-05-26), XP002777510, -& JP 2016 093926 A (DAIKYONISHIKAWA CORP) 26. Mai 2016 (2016-05-26)
- VELLA PIERRE C ET AL: "A new process chain for producing bulk metallic glass replication masters with micro- and nano-scale features", THE INTERNATIONAL JOURNAL OF ADVANCED MANUFACTURING TECHNOLOGY, SPRINGER, LONDON, Bd. 76, Nr. 1, 5. September 2014 (2014-09-05), Seiten 523-543, XP035743923, ISSN: 0268-3768, DOI: 10.1007/S00170-014-6148-1 [gefunden am 2014-09-05]

## Beschreibung

Die Erfindung betrifft allgemein das Markieren von Kunststoff-Spritzgussteilen für Energieführungsketten.

Energieführungsketten dienen zum geschützten und dynamischen Führen von Leitungen, wie Kabeln, Schläuchen und dgl., zwischen zwei relativbeweglichen Anschlussstellen. Energieführungsketten werden typisch aus einzelnen Kettengliedern aufgebaut, die je ein oder mehrere Kunststoff-Spritzgussteile umfassen. Bekannt sind bspw. laschenartige Seitenteile für ein mehrteiliges Kettenglied, die im Spritzgussverfahren als einteiliger Kunststoffkörper hergestellt sind. Die Außenseite und die Innenseite des Kunststoffbauteils haben jeweils eine Oberfläche deren Beschaffenheit durch den gewählten Kunststoff, aber vor allem durch das verwendete Spritzgießwerkzeug bestimmt ist. Es sind auch einteilige im Spritzgussverfahren hergestellte Kettenglieder bekannt. Im Spritzgussverfahren lassen sich direkt verwendbare Formteile von Energieführungsketten in Großserien bzw. Massenfertigung kostengünstig herstellen.

Die Erfindung betrifft im Einzelnen ein solches gattungsgemäßes Kunststoff-Spritzgussteil einer Energieführungskette, z.B. ein Seitenteil eines Kettenglieds, wobei das Spritzgussteil im Spritzgussverfahren als einteiliger Kunststoffkörper hergestellt ist, der eine erste Seite, insbesondere die Außenseite des Seitenteils, mit einer ersten Oberfläche und eine zweite Seite, insbesondere die Innenseite des Seitenteils, aufweist. Zumindest eine Markierung ist im Spritzgussverfahren in den Kunststoffkörper eingebracht und an der ersten Seite sichtbar vorgesehen.

Im Spritzgussverfahren können durch entsprechende Gestaltung der Negativform Markierungen eingebracht werden, wie etwa vorstehende oder vertiefte Beschriftungen der Oberfläche z.B. mit Artikelnummer und Hersteller. Es ist auch bekannt, beim Spritzgießen variable Markierungen einzubringen, z.B. zum Herstellungsdatum. Dies erfolgt typisch durch mehrere sog. "Gießuhren", d.h. im Spritzgießwerkzeug drehbare Stempel, die eine Art Zeitstempel in den Kunststoffkörper einbringen, der meist an der Außenseite sichtbar ist.

Die beiden Arten vorgenannter Markierungen finden sich auf vielen als Katalogprodukten erhältlichen Spritzgussteilen für Energieführungsketten der Anmelderin (igus GmbH). Eine Markierung bedeutet hier insbesondere eine optisch lesbare Information, gleich ob menschen- und/oder maschinenlesbar.

Auch aus DE 11 2004 000 584 T5 ist ein Kettenglied einer Energieführungskette bekannt, an dessen Seitenteilen in herkömmlicher Weise zur Angabe des Herstellungsmonats und Herstellungsjahrs zwei Zeitstempel in Spritzgusstechnik angebracht sind (vgl. dort FIG.2). DE 10 2008 046700 A1 beschreibt ein Kettenglied einer Energieführungskette mit spritzgegossenen Anschlageinrichtungen, welche Beschriftungen zur Kennzeichnung des Typs der Anschlageinrichtung aufweisen.

In der Markierungs- und Kennzeichnungstechnologie von Produkten ganz allgemein finden nun vermehrt sogenannte 2D-Codes Anwendung, insbesondere Matrix-Codes. Verbreitet sind z.B. der sog. QR-Code^{®}, insbesondere nach ISO/IEC 18004, oder der sog. DataMatrix^{™}-Code, insbesondere nach ISO/IEC 16022. Es handelt sich jeweils um optisch maschinenlesbare Symbole. Sie bieten u.a. höhere Informationsdichte im Vergleich zu alphanumerischer Beschriftung oder EAN-Barcodes. Zweidimensionale Codes werden zur Teileidentifikation in der Herstellung genutzt, bspw. in der Prozessautomatisierung, zur Verfolgbarkeit, Qualitätskontrolle, usw.. Eine zuverlässige, schnelle und präzise Identifikation ist auch nach der Herstellung vorteilhaft, insbesondere beim Nutzer.

Eine vermehrt eingesetzte Technik ist die direkte Teilekennzeichnung bzw. Direktmarkierung von Teilen (Engl. "Direct Part Marking": DPM) mit zweidimensionalen Codes (2D-Codes) auf Teileoberflächen. DPM betrifft Verfahren zum Aufbringen einer dauerhaften Markierung unmittelbar an der Oberfläche eines Produkts. Im Vergleich zum nachträglichen Aufbringen von Etiketten oder dgl. ist die Direktmarkierung sicherer und einfacher zu automatisieren.

Verschiedene DPM-Technologien sind bekannt, vgl. Einleitung in WO 2016/054647 A1. Bekannt ist z.B. Laserbeschriftung, welche z.T. auch für Kunststoffteile geeignet ist. So beschreiben z.B. die Patente DE 10 2005 017 807 B4 und DE 10 2005 017 808 B4 aus einem entfernten Gebiet, Spritzgussteile für Kraftstoff-Einspritzventile, die ein besondere zusätzliche Kunststofflage zur Laserbeschriftung aufweisen.

Auch bekannt sind Nadelpräger, Ritzpräger, Nadel-Ritz-Graviersysteme und ähnliche Graviermaschinen, um eine Markierung direkt in die Teileoberfläche einzubringen. Diese werden überwiegend für Metallteile eingesetzt. Es handelt sich, wie beim Lasergravieren um intrusive bzw. subtraktive Methoden, welche die Oberfläche des Bauteils nachträglich kontrolliert verändern, um z.B. die gewünschte Datencode-Markierung mit dem 2D-Code einzubringen.

Es sind auch nicht-intrusive Techniken, insbesondere additive Markierverfahren bekannt, die durch nachträgliches Aufbringen einer Medienschicht auf der Oberfläche markieren, z.B. die Tintenstrahlmarkierung, vgl. Einzelheiten im Technischen Bericht ISO/IEC TR 24720 (Erstausgabe 2008).

Die vorstehenden DPM-Techniken können in den Produktionsprozess integriert werden, markieren Bauteile jedoch nachträglich in einem separaten Schritt. Dadurch entsteht Zusatzaufwand und eine Verwechslungssicherheit ist nicht inhärent (d.h. falsche Teilemarkierung ist möglich).

Im dem Bereich der Metall-Gießtechnik wurde ferner bereits vorgeschlagen, Teile ohne zusätzlichen Arbeitsgang, im Rahmen der Urformung des Formteils, mit einer optisch lesbaren Code-Markierung zu versehen.

In der Patentanmeldung WO 02/09018 A1 wurde vorgeschlagen, einen speziellen Einsatz in der Formenherstellung der Keramik-Gießform einzusetzen, welcher eine Negativform eines gewünschten Matrix-Codes, z.B. eines DataMatrix^{™} Codes in der Hohlform erzeugt, z.B. für ein Rotorblatt einer Turbine. Der spezielle Einsatz wird dabei in das Modell (Positivform) integriert, das zur Herstellung der Hohlform (Negativform), für ein anschließendes Urformen aus dem flüssigen Zustand dient. Der Einsatz und das Modell sind aus wachsartigem schmelzbaren Material. Beide werden durch Erhitzen aus der Hohlform entfernt, sodass eine Negativform des gewünschten 2D-Codes in der Hohlform verbleibt.

Einen weiteren Ansatz zur Markierung von Metall-Gussteilen während des Urformprozesses (Urformen aus dem flüssigen Zustand) beschreibt das Patent DE 10 2008 024 906 B3. Hiermit soll eine manipulationssichere Markierung von Gussteilen während des Urformprozesses ermöglicht werden. Dabei wird ein bzgl. der Codierung einstellbarer Stempel vorgesehen, der variabel einstellbare Negativformen der Matrixcode-Elemente an der der Metallschmelze zugewandten Gussformwandung erzeugt, welche der Gießvorgang mit Schmelze zur Bildung eines 2D-Codes ausfüllt. Somit kann der Code von einem Teil zum nächsten neu eingestellt werden. Ein solches Formwerkzeug ist komplex, kostenintensiv und wartungsintensiv bzw. fehleranfällig.

Die beiden vorstehenden Ansätze aus der Gießereitechnik sind nicht ohne weiteres für Kunststoff-Spritzgussverfahren mit relativ hohem Druck (Urformen aus dem plastischen Zustand) geeignet.

EP 3 305 498 A1 beschreibt Kfz-Bauteile aus Kunststoff, wie bspw. Gehäuse für verschiedene Komponenten oder Teile der Fahrzeugverkleidung, die mit einem multi-dimensionalen Code wie bspw. einem Data-matrix-Code oder einem QR-Code markiert sind. Der Code erlaubt die Bauteilidentifizierung im Prozess, z.B. um auf Korrekten Einbau des gewünschten Bauteils zu prüfen. Der Code wird nach EP 3 305 498 A1 durch ein Urformen der Code-Struktur zusammen mit dem Bauteil hergestellt, bspw. im Spritzgussverfahren, im Blasformverfahren oder im3D-Druck.

Bei Kunststoff-Spritzgussteilen für Energieführungsketten kommt jedoch erschwerend hinzu, dass die endfertigen Teile eine hohe Festigkeit aufweisen sollen und im Betrieb typisch Verschleiß ausgesetzt sind. Solche Teile aus Spezialkunststoff sind daher mit üblichen Techniken zur Direktmarkierung wenn überhaupt nur bedingt zuverlässig markierbar. Auch eine Laserbeschriftung ist nicht mit allen Kunststoffen ohne weiteres möglich.

Eine Markierung von Spritzgussteilen mit Zusatzinformationen ist jedoch auch im Zuge der Herstellung von Energieführungsketten aus technischen Kunststoffen wünschenswert.

Eine Aufgabe der Erfindung ist es mithin, eine kostengünstige und zuverlässige Technik aufzuzeigen die es erlaubt, Spritzgussteile einer Energieführungskette zu markieren. Die Technik sollte insbesondere verwechslungssicher und möglichst zuverlässig sein, auch bei sehr hohen Stückzahlen.

Diese Aufgabe wird erfindungsgemäß gelöst durch ein Kettenglied einer Energieführungskette umfassend mindestens ein Kunststoff-Spritzgussteil nach Anspruch 1.

Es wird nach dem Oberbegriff aus Anspruch 1 zunächst ein Kettenglied einer Energieführungskette umfassend mindestens ein Kunststoff-Spritzgussteil vorgeschlagen, beispielsweise ein Seitenteil eines Kettenglieds, das im Spritzgussverfahren aus einem Kunststoff mit einer durchgehend gleichbleibenden Farbgebung als einteiliger Kunststoffkörper hergestellt ist. Der Kunststoffkörper hat eine erste Seite, bspw. eine Außenseite des Seitenteils, mit einer ersten Oberfläche und eine zweite Seite, bspw. eine gegenüberliegende Innenseite des Seitenteils. Es kann dabei zumindest eine Markierung im Zuge der Herstellung im Spritzgussverfahren bereits in den Kunststoffkörper eingebracht werden, so dass die Markierung an der ersten Seite sichtbar ist. In einfachster Ausführungsform wird erfindungsgemäß vorgeschlagen, dass die Markierung eine Datencode-Markierung mit einem 2D-Code, nämlich einem QR-Code, umfasst, der bereits bei der Herstellung im Spritzgussverfahren in den Kunststoffkörper eingebracht wird und an der ersten Seite maschinenlesbar vorgesehen ist. Der 2D-Code dient zur Datencodierung bzw. codiert Daten und ist zur Erfassung dieser Daten durch ein Datenerfassungsgerät geeignet. Die Erfassung kann dabei optisch, insbesondere elektrooptisch, mit einem handelsüblichen Datenerfassungsgerät bzw. Code-Lesegerät erfolgen.

Erfindungsgemäß wird die Datencode-Markierung somit zusammen mit dem eigentlichen Spritzgusskörper im Zuge seiner Herstellung aus einem visuell schwarzen Kunststoff im Spritzgussverfahren bzw. in einem entsprechend gestalteten Formwerkzeug bzw. Spritzgießwerkzeug erzeugt. Aufgrund der festen Zuordnung im Formwerkzeug sind Verwechslungen ausgeschlossen.

Die Datencode-Markierung wird bzw. ist integraler Bestandteil des Spritzgusskörpers und kann somit nicht, jedenfalls nicht zerstörungsfrei, von diesem getrennt werden.

Die Herstellungskosten für eine solche spezielle Datencode-Markierung werden durch die Integration in das Spritzgussverfahren minimiert, da lediglich Einmalkosten für die Herstellung bzw. nachträgliche Anpassung des Spritzgießwerkzeugs entstehen.

Eine Herstellung im 2-Komponentenverfahren ist grundsätzlich möglich, eine materialeinheitliche Herstellung der Datencode-Markierung mit dem 2D-Code aus ein und demselben Kunststoff, aus welchem der Spritzgusskörper besteht, ist jedoch bevorzugt. Der 2D-Code ist somit einteilig mit dem Kunststoffkörper hergestellt bzw. geformt, insbesondere materialeinheitlich aus demselben Kunststoffmaterial. Diese Lösung erlaubt eine besonders kostengünstige Herstellung unter Verwendung relativ einfacher Werkzeuge.

In bevorzugter Ausführungsform wird als 2D-Code in der Datencode-Markierung ein Matrix-Code in einem bereits verbreiteten bzw. standardisierten Format eingesetzt, beispielsweise ein QR-Code nach ISO/IEC 18004. Als QR-Codes werden vorliegend auch dessen Varianten wie Micro-QR-Code, SQRC, iQR-Code oder Design-QR-Code usw. verstanden.

Ebenfalls verbreitet ist das Format des sogenannten DataMatrix^{™}-Code nach ISO/IEC 16022 oder auch eine sogenannte GS1-DataMatrix. Auch andere bekannte 2D-Codes sind möglich, z.B. ein EZ-Code^{®}.

Unter "Code" wird hier die Abbildung von Daten in ein optisch erkennbares Symbol verstanden. Derartige Codes verwenden zur Codierung eine räumlich zweidimensionale Anordnung von zwei optisch verschiedenen Typen von flächigen Elementen, Codefeldern bzw. sog. Symbolmodulen (nachfolgend Symbolelemente), die das eigentliche Datencode-Symbol insgesamt zusammensetzen. Nachfolgend werden die zwei verschiedenen Elementtypen als erste Symbolelemente und als zweite Symbolelemente bezeichnet.

Ein Symbolelement ist vorliegend ein flächiger Bereich, der durch optische Wirkung und/oder Form zusammen mit weiteren Symbolelementen ein 2D-Code-Symbol darstellt. Symbolelemente der ersten Art weisen eine weitestgehend ähnlich optische Wirkung und/oder Form auf bzw. sind untereinander optisch gleichwirkend. Entsprechendes gilt für die zweiten Symbolelemente. Die ersten Symbolelemente unterscheiden sich aber signifikant in ihrer optischen Wirkung und/oder Formgebung von den zweiten Symbolelementen. Bei konventionellen, aufgedruckten Matrix-Codes handelt es sich um typisch gleich große quadratische Zellen als Symbolmodulen in zwei verschiedenen optisch gut unterscheidbaren Kontrastfarben, meist schwarz/weiß.

Die ersten Symbolelemente und die zweiten Symbolelemente sind dabei integrale Bestandteile des Kunststoffkörpers, d.h. werden durch diesen gebildet, ohne dass z.B. ein Auftragen oder Aufdrucken erforderlich ist.

In einer bevorzugten Ausführungsform wird jedoch vorgesehen, dass die ersten Symbolelemente eine andere (wirkliche) Oberflächenbeschaffenheit aufweisen, als die zweiten Symbolelemente. Durch die unterschiedliche Oberflächenbeschaffenheit der Symbolelemente lässt sich ein optischer Kontrast im Sinne unterschiedlicher Lichtreflektion erkennen, insbesondere auch ohne unterschiedliche Farbgebung der Stoffe welche die Symbolelemente darstellen.

Beim erfindungsgemäßen Ansatz wird bevorzugt ein und derselbe Kunststoff für das Energieführungskettenbauteil und die Datencode-Markierung eingesetzt. Eine unterschiedliche Farbgebung der Symbolelemente ist nicht vorgesehen.

Zur weiteren Vereinfachung der Herstellung kann vorgesehen sein, dass die ersten Symbolelemente die gleiche Oberflächenbeschaffenheit aufweisen, welche auch eine erste Oberfläche des Spritzgussteils, jedenfalls über einen überwiegenden Flächenanteil der ersten Oberfläche, aufweist. Die zweiten Symbolelemente können dabei insbesondere eine demgegenüber unterschiedliche Oberflächenprofil haben bzw. unterschiedliche Profileigenschaften betreffend die wirkliche Oberflächenbeschaffenheit. Oberflächenprofil meint dabei das wirkliche Oberflächenprofil im Querschnitt entlang zumindest einer der Hauptrichtungen, vorzugsweise entlang beiden Richtungen. Das Profil hat vorzugsweise über die Fläche aller zweiten Symbolelemente durchgehend identische bzw. optisch gleichwertige Eigenschaften. Die Oberfläche bzw. Profileigenschaft kann dabei ungeordnet, ungleichmäßig und/oder chaotisch sein.

Die ersten und zweiten Symbolelemente können sich insbesondere hinsichtlich ihrer Rauheitskenngrößen (DIN EN ISO 4287) unterscheiden

In bevorzugter Ausführungsform wird insbesondere vorgesehen, dass die ersten Symbolelemente eine glattere Oberfläche aufweisen, d.h. eine betragsmäßig geringere Rautiefe aufweisen als die zweiten Symbolelemente. Dabei haben alle ersten Symbolelemente eine im technischen Sinne identische Oberflächenbeschaffenheit untereinander, jedoch eine gegenüber allen zweiten Symbolelementen nachweisbar unterschiedliche Oberflächenbeschaffenheit. Die Rautiefe lässt sich mit an sich bekannten technischen Verfahren an der Oberfläche der Symbolelemente messtechnisch erfassen.

In einer bevorzugten Ausführungsform ist vorgesehen, dass die ersten Symbolelemente einen arithmetischen Mittenrauwert Ra im Bereich von 0,5um bis 3,5um (Mikrometer), bevorzugt im Bereich von 0,75um bis 2,75µm, aufweisen und die zweiten Symbolelemente einen arithmetischen Mittenrauwert Ra im Bereich von 5µm bis 12µm, bevorzugt im Bereich von 6,50um bis 10,50um, aufweisen. Die Messung des arithmetischen Mittenrauwerts Ra kann dabei insbesondere nach der Norm DIN EN ISO 4288 (Version 1997) im Tastschnittverfahren erfolgen, mit Ra als normierter Kenngröße nach DIN EN ISO 4287 (Version 1998).

Zur Vereinfachung der Formenherstellung kann vorgesehen sein, dass die ersten Symbolelemente im Vergleich zu einem an die Datencode-Markierung angrenzenden Bereich der ersten Oberfläche flächenbündig bzw. planeben mit dieser angeordnet sind bzw. liegen. Die ersten Symbolelemente können stufenlos in die umgebende Oberfläche des Spritzgussteils übergehen. Diese Anordnung vereinfacht den Formenbau da so ggf. lediglich für die zweiten Symbolelemente besondere Bearbeitung benötigt wird.

Eine besonders einfache Erstherstellung bzw. nachträgliche Anpassung eines geeigneten bzw. bestehenden Spritzgießwerkzeugs wird ermöglicht, wenn die zweiten Symbolelemente durch Bereiche gebildet werden, die gegenüber der Oberfläche der ersten Seite des Spritzgussteils vorstehen bzw. erhaben sind. Dies hat besonders bei dünnwandigeren Komponenten den Vorteil die (makroskopische) Geometrie des Spritzgussteils nicht zu verändern. Es ist vorteilhaft wenn die Markierung keine Schwächung der Wandstärke bewirkt, weil Kettenglieder, insbesondere Seitenlaschen von Energieketten, im Betrieb z.T. sehr hohen Kräften ausgesetzt sind.

Zur optischen Erfassung ist es vorteilhaft, wenn der mittlere Höhenunterschied zwischen den Oberflächen der ersten und zweiten Symbolelemente kleiner oder gleich 0,5mm beträgt. Damit lassen sich auch Symbolelemente mit relativ kleiner, z.B. quadratischer Grundfläche auch bei stark schräger Ausrichtung zur optischen Achse des Datenerfassungsgeräts zuverlässig auslesen. Zum wird die Bauteilgeometrie nicht spürbar verändert.

Die Datencode-Markierung kann insbesondere zusammen mit einem Strukturbereich des Spritzgussteils hergestellt sein, d.h. ohne zusätzlichen, gesonderten Teile-Bereich für die Markierung bzw. entsprechenden Materialaufwand.

Alternativ bzw. ergänzend ist es möglich, die Datencode-Markierung insgesamt in einem gegenüber der ersten Oberfläche vertieften Bereich der ersten Seite des Spritzgusskörpers vorzusehen. Dies schützt die Markierung u.a. gegen Abrieb etwa an Störkanten oder dergleichen. Ebenso ist es möglich, ergänzend oder alternativ die zweiten Symbolelemente durch Bereiche zu bilden, die gegenüber der Oberfläche der ersten Seite des Spritzgussteils vertieft sind bzw. zurückspringen. Die Datencode-Markierung sollte ungeachtet dessen in einem gut sichtbaren, jedoch möglichst nicht oder wenig verschleißanfälligen Flächenbereich des Kunststoffkörpers vorgesehen werden.

Ungeachtet der gewählten Oberflächenbeschaffenheit beider Arten von Symbolelementen des 2D-Codes sieht eine bevorzugte Ausführungsform vor, dass die zweiten Symbolelemente durch ihre Oberfläche bei identischer Lichteinstrahlung eine stärkere Lichtstreuung bzw. stärker ausgeprägte diffuse Reflektion bewirken bzw. erzeugen, als die ersten Symbolelemente. Durch unterschiedliche Lichtstreuung kann ohne Änderung der Materialbeschaffenheit ein Helligkeitsunterschied optisch bzw. visuell wahrnehmbar gemacht werden. Mit anderen Worten, die Symbolelemente sind bevorzugt nicht verfärbt, sondern bewirken optischen Kontrast lediglich aufgrund unterschiedlicher Lichtstreuung.

Der optische Kontrast bzw. die optische Differenzierbarkeit der unterschiedlichen Symbolelemente wird somit bevorzugt durch unterschiedliche optische Streueigenschaften hervorgerufen. Die ersten Symbolelemente können dabei beispielsweise eine technisch möglichst geringe Rauheit bzw. Rauhigkeit aufweisen und dementsprechend näherungsweise wie eine gewöhnliche Reflektionsoberfläche wirken, die einfallendes Licht relativ gut reflektiert (Einfallswinkel = Ausfallswinkel, unter Berücksichtigung des materialabhängigen Absorptionsgrades). Demgegenüber haben die zweiten Symbolelemente aufgrund der vorgegebenen andersartigen Oberflächenbeschaffenheit, beispielsweise durch entsprechende Aufrauhung im Spritzgießwerkzeug, eine vorbestimmte, deutlich stärkere optische Streuwirkung hinsichtlich auftreffendem Licht. Die stärkere Lichtstreuung der zweiten Symbolelemente im Vergleich zu den ersten Symbolelementen lässt sich bspw. über den Streukoeffizienten oder den Streuquerschnitt mit an sich bekanntem optischen Verfahren ermitteln und gegebenenfalls optimieren.

Versuche haben gezeigt, dass bereits die stärkere Lichtstreuung durch die zweiten Symbolelemente im Vergleich zu den ersten Symbolelemente eine ausreichenden optische Unterscheidbarkeit bietet, um herkömmliche Matrix-Codes, bspw. einen QR-Code, mit handelsüblichen Geräten, z.B. einem gängigen Smartphone zuverlässig zu erkennen.

Die Lichtstreuung durch die zweiten Symbolelemente sollte ideal diffuser Reflektion (Lambert-Strahler) möglichst nahekommen. Dazu können die zweiten Symbolelemente insbesondere an ihren Oberflächen eine große Rauheit relativ zum Wellenlängenbereich sichtbaren Lichts aufweisen. Die ersten und zweiten Symbolelemente können grundsätzlich bezogen auf dieselbe Messanordnung unterschiedliche Licht-Remissionsgrade aufweisen, die sich z.B. um mindestens 20% unterscheiden. Die ersten Symbolelemente können dabei eine glatte z.T. reflektierende Oberfläche haben.

In bevorzugter Ausführungsform erzeugen die zweiten Symbolelemente weiterhin eine optisch im Wesentlichen isotrope Lichtstreuung. Unter Annahme eines sphärischen Koordinatensystems mit Polachse bzw. Z-Achse parallel zur Flächennormalen an der Grundfläche des 2D-Codes als Äquatorebene (z.B. bündig an der Oberfläche der ersten Symbolelemente) bedeutet im Wesentlichen isotrope Lichtstreuung hier, dass die Quantität der Lichtstreuung in eine ausgewählte Richtung bei konstantem Azimutwinkel im Wesentlichen nicht vom Polarwinkel abhängt. Dies lässt sich meist visuell prüfen, z.B. wenn bei Drehen des Bauteils um die Z-Achse und gleichbleibender Lichteinstrahlung keine wesentliche Helligkeitsänderung an den zweiten Symbolelementen vom Betrachter wahrgenommen wird.

Eine derartige im Wesentlichen isotrope Lichtstreuung lässt sich beispielsweise durch aperiodische, z.B. technisch chaotische, Oberflächenprofile erzielen, die so eingestellt ist, dass die quantitative Abweichung über den gesamten Polarwinkelbereich (von 0 bis 2n) kleiner als eine vorgegebene Schwelle ist, z.B. über den gesamten Polarwinkelbereich um nicht mehr als 15% Abweichung zeigt. Eine nach allen Richtungen näherungsweise gleiche (isotrope) Lichtstreuung kann insbesondere erzielt werden, wenn die Rauhigkeit, bzw. die Abweichung von einer ideal glatten Fläche, an den zweiten Symbolelementen weitestgehend von beiden Flächenrichtungen unabhängig bzw. zufällig ist.

Denkbar wäre auch anisotrope Lichtstreuung z.B. durch Beugungsgitter oder ähnliche periodische Strukturen, z.B. regelmäßige Schraffierungen der Oberfläche. Ein Vorteil isotroper Lichtstreuung liegt aber darin, dass die relative Orientierung der Datencode-Markierung zur Optik des Datenerfassungsgeräts hinsichtlich des Polarwinkels damit unerheblich ist. Dies ist besonders bei Energieführungsketten vorteilhaft, weil diese keine vorgegebene Orientierung in der Endanwendung haben. Energieführungsketten kommen in unterschiedlichsten räumlichen Orientierungen zum Einsatz und bilden in den meisten Anwendungen zwei um 180° zueinander gedrehte Trume.

Durch die erfindungsgemäße Erzeugung der Datencode-Markierung mit dem 2D-Code beim Spritzgießen bzw. im Spritzgießwerkzeug wird insbesondere ermöglicht, dass der 2D-Code einschließlich der sichtbaren Oberflächen der ersten und zweiten Symbolelemente einstückig aus demselben Kunststoff hergestellt wird wie der eigentliche Kunststoffkörper selbst. Hierbei können insbesondere für Spritzgussteile von Energieführungsketten übliche Polymere bzw. Kunststoffmischungen, beispielsweise mit einem überwiegenden Gewichtsanteil Polyamid ggf. mit Verstärkungsfasern, eingesetzt werden. Die Datencode-Markierung ist insbesondere bei durchgehend gleichbleibender Farbgebung des Kunststoffs möglich, auch mit einem visuell schwarzen Kunststoff, d.h. auch ohne stofflich unterschiedliche Farbgebung der beiden Grundarten von Symbolelementen im 2D-Code.

Die erfindungsgemäße Datencode-Markierung ist insbesondere in Kombination mit Spritzgussteilen aus faserverstärktem spritzgießfähigem Kunststoff vorteilhaft.

Die vorgeschlagene Lösung erlaubt es insbesondere, die Datencode-Markierung mit dem 2D-Code werkzeugfallend mit dem Kunststoffkörper herzustellen, so dass dieser ohne jegliche Nachbearbeitung bereits maschinenlesbar ist. Die Datencode-Markierung kann folglich insbesondere als Direktmarkierung zusammen mit dem Spritzgussteil in derselben Spritzgießform hergestellt werden. Dies erlaubt eine besonders kostengünstige Markierung mit einem 2D-Code bzw. einem Matrix-Code.

Versuche zeigen, dass sich eine optisch gut erfassbare unterschiedliche Oberflächenbeschaffenheit der ersten Symbolelemente gegenüber den zweiten Symbolelementen dadurch erzielen lässt, wenn einerseits die ersten Symbolelemente eine Oberflächenbeschaffenheit aufweisen, die einer Funken-Senkerosion des Formwerkzeugs durch elektroerosives Bearbeiten bzw. funkenerosives Abtragen (DIN 8580) erzielen lässt. Andererseits lässt sich eine geeignete Oberflächenbeschaffenheit der zweiten Symbolelemente erzielen, wenn deren Oberflächenbeschaffenheit einer Lasergravur, insbesondere einer Tiefen-Lasergravur bzw. 3D-Lasergravur der Spritzgießform (Formwerkzeug) entspricht. Dabei kann die erste Oberfläche der ersten Seite des Spritzgussteils außerhalb der Datencode-Markierung ebenfalls einer Funken-Senkerosion entsprechen. Die erste Seite kann dabei bestimmungsgemäß eine Außenseite des Spritzgussteils sein. Die zweite Seite des Spritzgussteils kann eine zweite Oberfläche aufweisen, welche zumindest überwiegend dieselbe Oberflächenbeschaffenheit hat wie die erste Seite, d.h. ebenfalls eine durch Funkenerodieren (EDM: electrical discharge machining) erzeugte Oberflächengüte aufweisen.

Durch Funkenerosion lassen sich verhältnismäßig geringe Rautiefen der ersten Oberfläche und gegebenenfalls der ersten Symbolelemente erzielen, d.h. wünschenswert glatte Oberflächen. Ein weiterer Vorteil besteht darin, dass lediglich für den optischen Kontrast der zweiten Symbolelemente ein unterschiedliches Verfahren in der Werkzeugherstellung des Formwerkzeugs benötigt wird, z.B. eine Laserbearbeitung des Spritzgießwerkzeugs.

Datentechnisch ist die Datencode-Markierung vorzugsweise eine über alle identischen Spritzgussteile gleichbleibende Permanentmarkierung, d.h. im Spritzgießwerkzeug unveränderbar angelegt. Dabei können die vom 2D-Code codierten Daten insbesondere einen herstellerbezogenen URL-Identifikator oder einen PURL-Identifikator umfassen. So kann der Nutzer, beispielsweise das Wartungspersonal, unter Verwendung eines handelsüblichen Smartphones mit einer Software zum Einscannen des 2D-Codes, beispielsweise einem QR-Code-Reader, in einfachster Weise vor Ort von der Energieführungskette auf eine entsprechend vorbestimmte Internet-Seite des Herstellers geleitet werden.

Insbesondere zur Erkennung von Produktfälschungen ist es vorteilhaft, wenn die vom 2D-Code codierten Daten verschlüsselte und/oder spritzgussteilspezifische Dateninhalte umfassen. Hierzu kann z.B. ein SQRC-Code (secure QR-Code) eingesetzt werden.

Neben der speziellen Datencode-Markierung kann das Spritzgussteil weiterhin eine herkömmliche nutzerlesbare Markierung aufweisen, insbesondere eine Zeitmarkierung, die es erlaubt, den Herstellungszeitpunkt festzustellen. Diese lässt sich ebenfalls beim Spritzgießen in den Kunststoffkörper einbringen, z.B. mittels eines zeitvariablen Gießuhr-Markierstempels. Auch solche herkömmlichen, nutzerlesbaren Markierungen sind vorzugsweise an der ersten Seite des Spritzgussteils vorgesehen, an welcher auch die Datencode-Markierung vorgesehen ist.

Die Erfindung ist auf die Herstellung von mehrteiligen oder einteiligen Kettengliedern einer Energieführungskette und deren Anbauteilen anwendbar (z.B. Trennstege, Querböden, Endbefestigungen, Zugentlastungen usw.). Die erfindungsgemäße Datencode-Markierung mit einem 2D-Code kann damit beispielsweise sowohl an einem oder beiden Seitenteilen eines Kettenglieds (Kettenlaschen) als auch an zumindest einem die Seitenteile verbindenden Öffnungssteg vorgesehen sein. Dementsprechend kann jedes einzelne Spritzgussteil jeweils einen eigenen fest zugeordneten 2D-Code in der entsprechenden Datencode-Markierung aufweisen. Somit wird u.a. jedes Einzelteil der Energieführungskette für den Nutzer leicht identifizierbar. Bereits für Energieführungsketten einer bestimmten Produktserie sind unterschiedlichste Einzelteile möglich, abhängig von u.a. Umlenkradius, Kettenbreite, Kettenhöhe usw. die für Nutzer z.T. nur schwer unterscheidbar sind.

Das Spritzgießwerkzeug zur Herstellung von Spritzgussteilen aus Kunststoff für Energieführungsketten kann insbesondere aus Stahl gefertigt sein. Das Spritzgießwerkzeug hat einen vorbestimmten, fest im Spritzgießwerkzeug vorgegebenen Markierungsbereich für einen 2D-Code, der in der formgebenden Wandung zur Begrenzung der Spritzguss-Kavität gebildet bzw. eingearbeitet ist. Der Markierungsbereich weist dabei eine Anzahl erster Symbolbereiche auf, die insbesondere durch Funken-Senkerosion erzeugt sind, z.B. zusammen mit der Herstellung der Begrenzungswandung für die erste Oberfläche des Spritzgussteils. Weiterhin weist der Markierungsbereich im Formwerkzeug eine Anzahl zweiter Symbolbereiche auf, die andere Oberflächenbeschaffenheit, insbesondere eine größere Rautiefe aufweisen als die ersten Symbolbereiche. Die zweiten Symbolbereiche können dabei insbesondere im Zuge der Erstherstellung oder auch nachträglich, insbesondere durch Lasergravur des Spritzgießwerkzeugs erzeugt bzw. bereitgestellt werden. Als Lasergravur kommt insbesondere eine Tiefen-Lasergravur bzw. 3D-Lasergravur der Spritzgießform bzw. des Formwerkzeugs in Betracht.

Die ersten Symbolbereiche dienen daher der Erzeugung der ersten Symbolelemente und die zweiten Symbolbereiche der Erzeugung der zweiten Symbolelemente. Unter Spritzgießwerkzeug wird insbesondere eine Formhälfte (Halbschale) eines zweiteiligen Formwerkzeugs verstanden, da es ausreichend ist, wenn die Datencode-Markierung einseitig vorliegt.

Die vorgeschlagene Datencode-Markierung von Energiekettenteilen bietet unterschiedlichste Anwendungsvorteile. Ein Energieketten-Spritzgussteil mit 2D-Code kann unterschiedliche Zusatznutzen bieten. So kann z.B. die Montage und/oder Wartung vereinfacht oder unterstützt werden z.B. indem ein Aufrufen von Information zur Konstruktion, Montage und/oder Wartung der Energieführungskette. Es kann auch unmittelbar eine Ersatzteilbestellung anhand des 2D-Codes ermöglicht werden. Dabei kann der Nutzer durch Datenerfassung des 2D-Codes mit einem Smartphone, Tablett oder dgl. direkt am Kunststoff-Spritzgussteil auf eine herstellerseitige, z.B. der Produktserie zu diesem Kunststoff-Spritzgussteil zugeordnete Webseite geführt werden, z.B. über eine im QR-Code angelegte URL. Die Webseite kann Produktinformationen, wie z.B. Montage- oder Wartungsanleitungen, Spezifikationsdaten der Einzelteile und/oder Energieführungskette usw. aufweisen. Es kann ergänzend oder alternativ eine Bestellfunktion vorgesehen sein zur Ersatzteilbestellung.

Es kann insbesondere jedes Einzelteil einer bestimmten Energieführungskettenserie mit einem eindeutig zugeordneten eigenen 2D-Code versehen werden, um derartigen Zusatznutzen zu bieten.

Weiter können ggf. nach Einscannen des 2D-Code webbasiert ergänzende Abfragen, z.B. hinsichtlich mindestens eines Parameters des Kunststoff-Spritzgussteils, an den Nutzer gerichtet werden, um zielgerichtete Informationen zu liefern. Auch denkbar ist der Aufruf einer Applikation auf dem Endgerät, welche Zusatznutzen zum Produkt liefert.

Die Datencode-Markierung ist auch verwendbar zur Erkennung von Produktfälschungen, z.B. anhand verschlüsselter Zusatzdaten. Ergänzend und/oder alternativ kann der Nutzer durch Datenerfassung des 2D-Code am Kunststoff-Spritzgussteil auf eine herstellerseitige, dem Kunststoff-Spritzgussteil zugeordnete Webseite geführt werden. So können ergänzende Abfragen, insbesondere hinsichtlich mindestens eines Erkennungsmerkmals des Kunststoff-Spritzgussteils, an den Nutzer gerichtet werden, etwa um eine Aussage über die Authentizität bzw. eine Fälschung zu liefern.

Weitere Einzelheiten, Merkmale und Vorteile der Erfindung ergeben sich ohne Beschränkung aus der nachfolgenden, ausführlichen Beschreibung bevorzugter Ausführungsbeispiele anhand der beiliegenden Abbildungen. Diese zeigen:
**FIG.1****:** eine perspektivische Ansicht eines Teilabschnitts einer Energieführungskette aus Kettengliedern in an sich bekannter Bauweise;
**FIG.2A-2B****:** eine Seitenlasche (Außen lasche) als Spritzgussteil eines Kettenglied nach FIG.1 in Seitenansicht (FIG.2A) und Vergrößerung hieraus (FIG.2B) zur Veranschaulichung einer Datencode-Markierung;
**FIG.3****:** einen schematischen Querschnitt der Oberflächenprofile erster und zweiter Symbolelemente in der Datencode-Markierung nach FIG.2A-2B gemäß der Schnittlinie III-III in FIG.2B;
**FIG.4****:** eine schematische Draufsicht auf Kettenglieder ähnlich FIG.1, hier mit einer Datencode-Markierung auf einem Öffnungssteg;
**FIG.5****:** ein Lichtbild einer Formhälfte eines Spritzgießwerkzeugs zur Herstellung einer Seitenlasche nach FIG.2A-2B;
**FIG.6A-6B****:** Lichtbilder einer Messung der Rautiefe Ra für erste Symbolelemente (FIG.6A) und zweite Symbolelemente (FIG.6B) der Datencodemarkierung durch ein Messgerät nach DIN EN ISO 4288:1997 an einer Formhälfte eines Spritzgießwerkzeugs zur Herstellung eines Öffnungsstegs nach FIG.4; und
**FIG.6C****:** eine schematische Prinzip-Darstellung zum arithmetischen Mittenrauwert Ra (Kenngröße nach DIN EN ISO 4287:1998) an einem aperiodischen Oberflächenprofil (Z(x)) - analog zu den zweiten Symbolelementen in FIG.3 - über eine Messstrecke (lr).

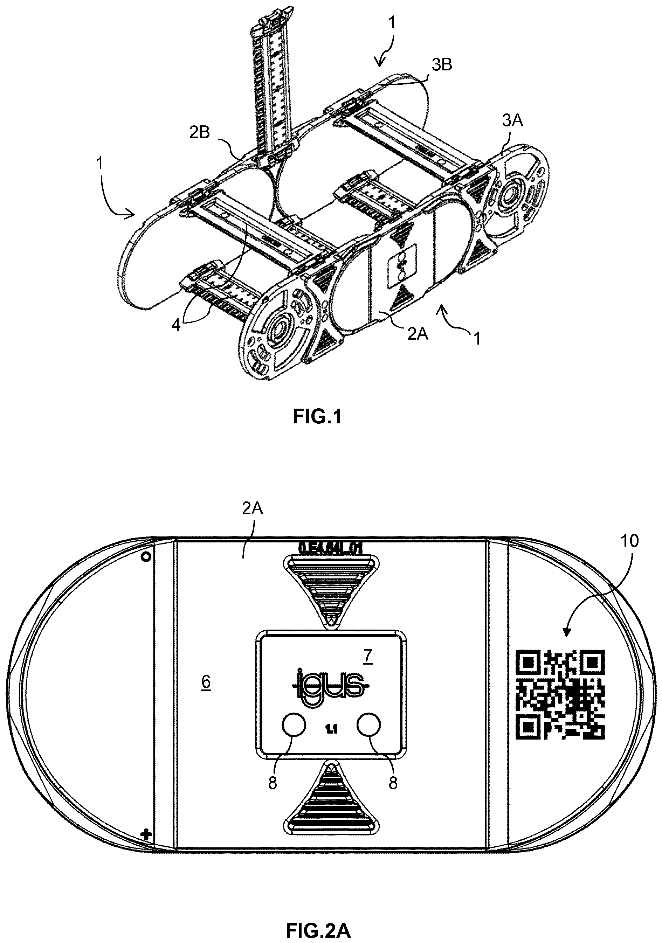

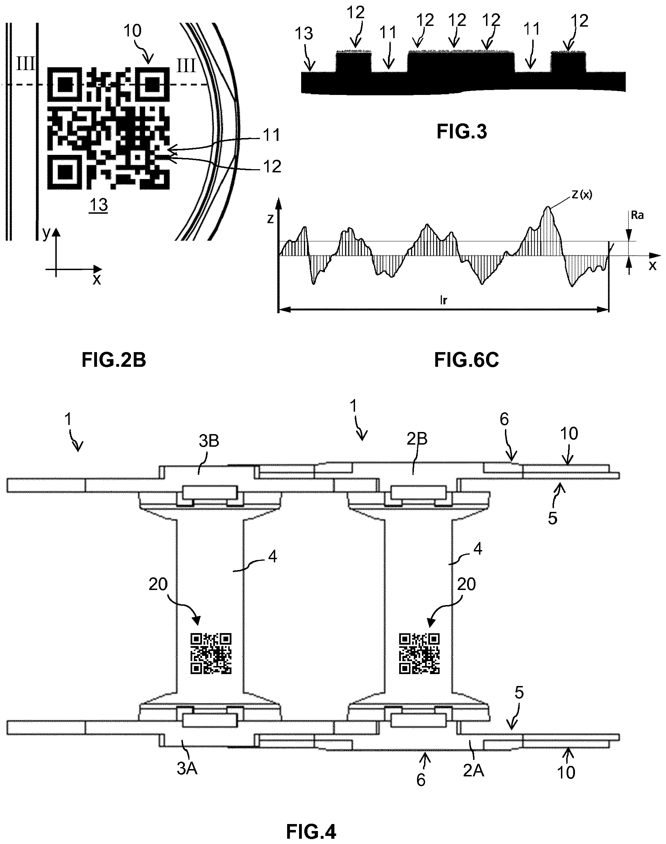

FIG.1 und FIG.4 zeigen einen Teilabschnitt einer bekannten Energieführungskette aus einzelnen Kettengliedern 1, z.B. der Produktserie mit Handelsbezeichnung E4.1L der igus GmbH (D-51147 Köln), die besonders leicht baut und dennoch sehr robust ist. In FIG.1 sind drei Kettenglieder 1, gezeigt, hier ein mittleres mit zwei sog. Außenlaschen 2A, 2B als Seitenlaschen und zwei weitere mit sog. Innenlaschen 3A, 3B. Die Außenlaschen 2A, 2B überlappen hierbei die Innenlaschen 3A, 3B und je zwei Seitenlaschen 2A, 2B; 3A, 3B sind über lösbare Querstege 4 (Öffnungsstege) miteinander zu Kettengliedern 1 verbunden. Die Seitenlaschen 2A, 2B; 3A, 3B bilden Laschenstränge, die sich über die gesamte Länge der Energieführungskette fortsetzen. Die Energieführungskette nach FIG.1 bzw. FIG.4 ist in WO 2014/161761 A1 näher beschrieben.

Die Seitenlaschen 2A, 2B; 3A, 3B und Querstege 4 sind Kunststoffteile aus einem technisch harten und zähen Kunststoff, z.B. Polyamid mit Verstärkungsfasern, und in Spritzgusstechnik hergestellt. Auf die konkrete Bauweise der Energieführungskette bzw. Kettenglieder 1 kommt es vorliegend jedoch nicht an, die Erfindung ist auf jegliche Spritzgussteile für Energieführungsketten anwendbar. Der Spritzgussteile 2A, 2B; 3A, 3B; 4 sind insbesondere aus einem weitgehend lichtundurchlässigen möglichst opaken, insbesondere schwarzen oder sehr dunkelfarbigem Kunststoff hergestellt. Die Seitenlaschen 2A, 2B; 3A, 3B und Querstege 4 haben jeweils - bezogen auf den Aufnahmeraum für Leitungen im Kettenglied 1 - eine Innenseite 5 und eine gegenüberliegende Außenseite 6 und insgesamt eine relativ flache, z.B. plattenähnliche Gestaltung.

FIG.2A-2B zeigen rein beispielhaft zur Veranschaulichung der Erfindung eine Außenlasche 2A eines Kettenglieds 1 nach FIG.1, wobei gleichwertig jegliche Art von Seitenlaschen bzw. auch einteilige Kettenglieder in Betracht kommen. In einem seitlich vorstehenden mittleren Bereich der Außenseite 6 der Seitenlasche 2A ist eine Markierungsfläche 7 vorgesehen mit einer Herstellerbeschriftung und zwei Zeitstempelbereichen 8 in denen durch drehbare Gießuhr-Markierstempel z.B. das Herstellungsdatum oder Herstellungsmonat und Jahr angegeben werden.

In einem endseitigen, nach innen versetzten Bereich der Außenseite 6 der Außenlasche 2A bzw. des Kettenglieds 1 ist eine Datencode-Markierung 10 mit einem flächigen zweidimensionalen Matrix-Code, hier einem QR-Code nach ISO/IEC 18004 mit z.B. als quadratisches Code-Symbol mit je nach Version 21x21 bis hin zu 177x177 einzelnen Feldern für Symbolmodule bzw. Symbolelemente vorgesehen. Die Datencode-Markierung 10 ist im Betrieb gut sichtbar und hat eine Größe von z.B. mindestens 15x15mm um auch aus einer bestimmten Entfernung gut für ein Datenerfassungsgerät, z.B. ein Smartphone, maschinenlesbar zu sein. Die Codierung eines QR-Code nach ISO/IEC 18004 als Datencode-Markierung 10 ist an sich bekannt und wird hier nicht näher erläutert. Der Zusatznutzen kann durch Einscannen des QR-Code 10 an FIG.2A getestet werden.

FIG.3 zeigt als Prinzipschema einen Schnitt in einer Richtung entlang der Linie III-III aus FIG.2A, hier beispielhaft beschränkt auf den in FIG.2A links oben gezeigten Positionsmarker. Wie FIG.3 veranschaulicht haben die einzelnen Symbolelemente, nämlich erste Symbolelemente 11 und zweite Symbolelemente 12 jeweils unterschiedliche Oberflächenbeschaffenheit. Dabei haben die zweiten Symbolelemente 12 insbesondere ein raueres Querschnittsprofil, d.h. eine größere Rautiefe als die ersten Symbolelemente 12. Die stärker ausgeprägte Rautiefe der zweiten Symbolelemente 12 ist insbesondere anhand des arithmetischen Mittenrauwert Ra messbar, der für die zweiten Symbolelemente 12 spürbar größer sein sollte als für die erste Symbolelemente 11, z.B. um einen Faktor des mindestens 2-fachen, vorzugsweise >3.

Die oberflächentechnisch glatteren ersten Symbolelemente 11 können dabei dieselbe Oberflächenbeschaffenheit aufweisen wie die restliche bzw. überwiegende erste Oberfläche 13 an der Außenseite 6 des Spritzgussteils 2A. Das Oberflächen- bzw. Querschnittsprofil beider Arten von Symbolelementen 11 bzw. 12 ist dabei in beide Flächenrichtungen x, y der Ebene aus FIG.2B gleichartig beschaffen und in FIG.3 nur schematisch und repräsentativ dargestellt. Die größere Rauhigkeit der zweiten Symbolelemente 12 ist so eingestellt, dass diese eine deutlich stärkere Lichtstreuung bewirken als die ersten Symbolelemente 11. Ferner ist das Oberflächenprofil der zweiten Symbolelemente 12 in beide Flächenrichtungen x, y der Hauptebene des Spritzgussteils 2A aperiodisch um eine weitgehend isotrope Lichtstreuung zu bewirken.

FIG.4 zeigt als weiteres Beispiel eines Spritzgussteils mit einem QR-Code als Datencode-Markierung 20 ein Quersteg bzw. Öffnungssteg 4 in der Geometrie gemäß FIG.1. Jedem Bauteil kann ggf. in jeder Baugröße einzeln ein zugehöriger eindeutiger Code zugewiesen werden, der im 2D-Code der Datencode-Markierung 10 bzw. 20 codiert ist und bspw. über die erkannte URL als Anfrageparameter mit an eine herstellerseitige Internetseite übermittelt wird.

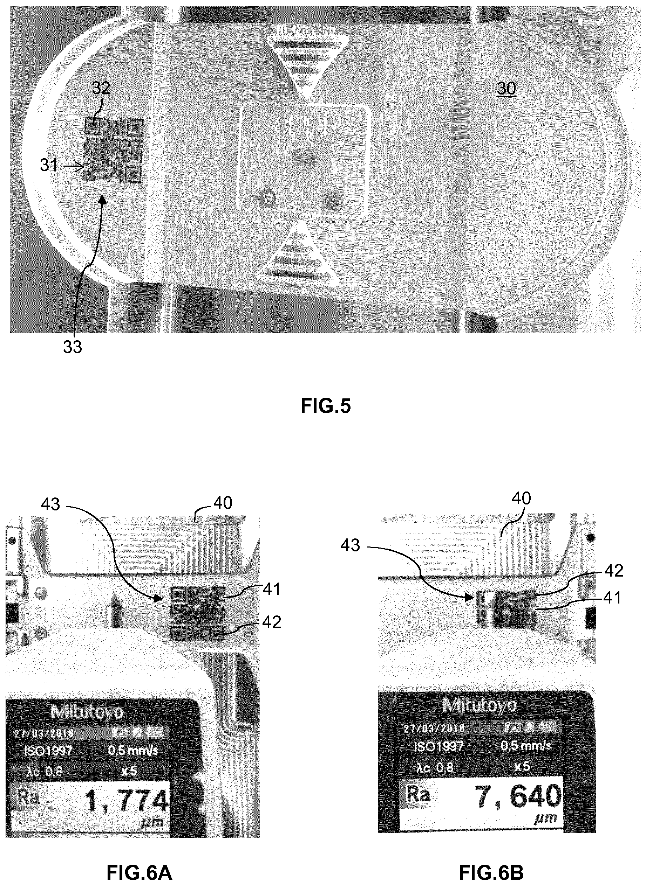

FIG.5 zeigt ein Foto einer Formhälfte 30 aus Stahl eines Kunststoff-Spritzgießwerkzeugs zur Herstellung einer Außenlasche 2A, 2B nach FIG.1-2. In der Formhälfte 30 des Spritzgießwerkzeugs nach FIG.5 ist zur werkzeugfallenden Erzeugung der Datencode-Markierung 10 zusammen mit dem Spritzgussteil 2A, 2B (vgl. FIG.1) unmittelbar im Spritzgussverfahren ein Markierungsbereich 33 und unveränderbar eingearbeitet. Der Markierungsbereich 33 entspricht der Negativform des gewünschten 2D-Code, z.B. einem QR-Code, der Datencode-Markierung 10 nach FIG.2A-2B. Demensprechend hat der Markierungsbereich 33 erste z.T. quadratische und feldartige Symbolbereiche 31. Die Symbolbereiche 31 können flächenbündig und ohne Unterschied in der Oberflächenbeschaffenheit zum Rest der glatten Begrenzungswandung der Formhälfte 30 ausgebildet sein, insbesondere durch Funken-Senkerosion (EDM: electrical discharge machining). Der Markierungsbereich 33 hat ferner zweite z.T. quadratische und feldartige Symbolbereiche 32 die gegenüber den Symbolbereichen 31 vertieft liegen. Die zweiten Symbolbereiche 32 können nachträglich durch Tiefen-Lasergravur bzw. 3D-Lasergravur der Formhälfte 30 bzw. Spritzgießform eingebracht werden. Die Lasergravur zur Herstellung der zweiten Symbolbereiche 32 erlaubt scharfkantige Übergänge und Parametereinstellungen zur Erzeugung des gewünschten aperiodischen isotrop streuenden Oberflächenprofils der zweiten Symbolelemente 12 (vgl. FIG.3).

Anhand einer solchen Formhälfte 30 kann eine Datencode-Markierung 10 bzw. 20 (FIG.2A-2B, FIG.4) materialeinheitlich mit dem Kunststoffkörper des Spritzgussteils 2A, 2B; 3A, 3B bzw. 4 und werkzeugfallend hergestellt werden. Eine Nachbearbeitung ist zur maschinenlesbaren Erkennung des Codes der Datencode-Markierung 10 bzw. 20 nicht erforderlich.

FIG.6A-6B zeigen eine weitere Formhälfte 40 aus Stahl zur Herstellung eines Öffnungsstegs 4 nach FIG.4. FIG.6A-6B veranschaulichen zudem beispielhaft die Messung der Rautiefe, hier des arithmetischen Mittenrauwert Ra im Tastschnittverfahren nach DIN EN ISO 4288 (Version 1997) an entsprechend durch ElektroErosion bzw. Lasergravur hergestellten Symbolbereichen 41, 42. Die ersten Symbolbereich haben dieselbe Beschaffenheit wir die sonstige überwiegende Oberfläche 13 des Spritzgussteils 4. Anzumerken ist, dass im Spritzgussverfahren näherungsweise dieselbe Rautiefe an der Oberfläche 13 des Kunststoff-Spritzgussteils gebildet werden kann, d.h. auch Strukturen im Mikrometer-Bereich ggf. auch Sub-Mikrometer-Bereich des Formwerkzeugs werden relativ formgetreu im fertigen Spritzgussteil 2A, 2B; 3A, 3B bzw. 4 abgebildet. Somit lassen sich empirisch die optischen Lichtstreuungs-Eigenschaften der durch die Symbolbereiche 32 bzw. 42 erzeugten Oberflächen (wirkliche Oberflächenprofile) an den zweiten Symbolelementen 12 optimieren.

Vergleichsmessungen an Prototypen zeigen, dass sich mit den Formwerkzeugen nach FIG.5 und FIG.6A-6B ersten Symbolelemente 11 (und eine erste Oberfläche 13) mit einem arithmetischen Mittenrauwert Ra im Bereich von 0,75-2,75µm, insbesondere kleiner 2um, erzielen lassen und andererseits Oberflächenprofile an den zweiten Symbolelementen 12 mit einem arithmetischen Mittenrauwert Ra im Bereich von 6,50-10,50um oder grösser. Entsprechend im Spritzgussverfahren in den Kunststoffkörper eingebrachte QR-Codes 10 bzw. 20 lassen sich optisch mit handelsüblichen Smartphones aus unterschiedlichsten Winkeln gut erfassen.

FIG.6C veranschaulicht als Rauheitskenngröße den arithmetischen Mittenrauwert Ra als Kenngröße nach DIN EN ISO 4287 (1998). Ra ist der arithmetische Mittelwert aus den Beträgen aller Profilwerte. Auch bei Ermittlung anderer Kenngrößen, wie z.B. der gemittelten Rautiefe Rz, durch ein elektrisches Tastschnittgerät lassen sich die Profile messen. In FIG.6C veranschaulicht Z(x) rein schematisch ein wirkliches Oberflächenprofil, es handelt sich nicht um ein Messergebnis. Durch Funken-Senkerosion lassen sich als Begrenzungswandungen der Formhälften 30, 40 sehr glatte Oberflächen erzielen, sodass ausgeprägte Spitzen und Riefen im Oberflächenprofil des Spritzgießwerkzeugs und damit des Spritzgussteil vermieden werden, und Ra aussagekräftig ist.

### Bezugszeichenliste

FIG.1-2A,2B
   1 Kettenglied (einer Energieführungskette)
   2A, 2B Außenlasche
   3A, 3B Innenlasche
   4 Quersteg (Öffnungssteg)
FIG.3-4
   2A Seitenlasche (z.B. Außenlasche)
   4 Quersteg (Öffnungssteg)
   5 Innenseite
   6 Außenseite
   7 Markierungsfläche
   8 Zeitstempel
   10, 20 Datencode-Markierung (z.B. QR-Code)
   11 erste Symbolelemente
   12 zweite Symbolelemente
   13 erste Oberfläche
   x,y Flächenrichtungen (in der Hauptebene)
FIG.5-6:
   30; 40 Formhälfte
   31; 41 erste Symbolbereiche
   32; 42 zweite Symbolbereiche
   33; 43 Markierungsbereich

## Patentansprüche

1. Kettenglied (1) einer Energieführungskette umfassend mindestens ein Kunststoff-Spritzgussteil (2A, 2B; 3A, 3B; 4), insbesondere Seitenteil (2A, 2B; 3A, 3B), wobei das Spritzgussteil (2A, 2B; 3A, 3B; 4) im Spritzgussverfahren als einteiliger Kunststoffkörper aus einem Kunststoff mit einer durchgehend gleichbleibenden Farbgebung hergestellt ist, der eine erste Seite, insbesondere Außenseite (6) des Seitenteils (2A, 2B; 3A, 3B), mit einer ersten Oberfläche (13) und eine zweite Seite, insbesondere Innenseite (5) des Seitenteils (2A, 2B; 3A, 3B), aufweist; und
wobei zumindest eine Markierung an der ersten Seite sichtbar vorgesehen ist; **dadurch gekennzeichnet,**
**dass** die zumindest eine Markierung eine Datencode-Markierung (10; 20) mit einem 2D-Code, nämlich einem QR-Code, insbesondere einem QR-Code nach ISO/IEC 18004, umfasst, welcher Daten codiert, und
**dass** die Datencode-Markierung mit dem QR-Code im Spritzgussverfahren aus einem visuell schwarzen Kunststoff in den Kunststoffkörper eingebracht und an der ersten Seite (6) maschinenlesbar vorgesehen ist.

2. Kettenglied nach Anspruch 1, **dadurch gekennzeichnet, dass** der 2D-Code einteilig, insbesondere materialeinheitlich, mit dem Kunststoffkörper geformt bzw. gebildet ist.

3. Kettenglied nach einem der Ansprüche 1 bis 2, **dadurch gekennzeichnet, dass** der 2D-Code (10; 20) zur Codierung erste Symbolelemente (11) und zweite Symbolelemente (12) umfasst, wobei die ersten Symbolelemente eine andere Oberflächenbeschaffenheit aufweisen, als die zweiten Symbolelemente.

4. Kettenglied nach Anspruch 3, **dadurch gekennzeichnet, dass** die ersten Symbolelemente (11) und die erste Oberfläche (13) des Spritzgussteils die gleiche Oberflächenbeschaffenheit aufweisen und/oder die zweiten Symbolelemente (12) ein anderes Oberflächenprofil aufweisen als die erste Oberfläche (13).

5. Kettenglied nach Anspruch 3 oder 4, **dadurch gekennzeichnet, dass** die ersten Symbolelemente (11) eine geringere Rautiefe aufweisen als die zweiten Symbolelemente (12), wobei die ersten Symbolelemente (11) insbesondere einen arithmetischen Mittenrauwert Ra im Bereich von 0,5-3,5um, bevorzugt im Bereich von 0,75-2,75µm, aufweisen und die zweiten Symbolelemente (12) insbesondere einen arithmetischen Mittenrauwert Ra, Rautiefe im Bereich von 5-12µm, bevorzugt im Bereich von 6,50-10,50pm, aufweisen.

6. Kettenglied nach einem der Ansprüche 3 bis 5, **dadurch gekennzeichnet, dass** die ersten Symbolelemente (11) planeben mit der ersten Oberfläche (13) in einem an die Datencode-Markierung (10; 20) angrenzenden Bereich liegen.

7. Kettenglied nach einem der Ansprüche 3 bis 6, **dadurch gekennzeichnet, dass** die zweiten Symbolelemente (12) durch gegenüber der Oberfläche (13) der ersten Seite des Spritzgussteils vorstehende Bereiche gebildet werden, wobei ein Höhenunterschied zwischen den ersten Symbolelementen (11) und den zweiten Symbolelementen (12) vorzugsweise kleiner als 0,5mm ist.

8. Kettenglied nach einem der Ansprüche 3 bis 6, **dadurch gekennzeichnet, dass** die Datencode-Markierung (10; 20) in einem gegenüber der ersten Oberfläche (13) vertieften Bereich (7) der ersten Seite vorgesehen ist und/oder die zweiten Symbolelemente (12) durch gegenüber der Oberfläche (13) der ersten Seite des Spritzgussteils vertiefte Bereiche gebildet werden.

9. Kettenglied nach einem der Ansprüche 3 bis 8, **dadurch gekennzeichnet, dass** die zweiten Symbolelemente (12) eine stärkere Lichtstreuung bewirken als die ersten Symbolelemente (11); vorzugsweise wobei die zweiten Symbolelemente (12) im Wesentlichen isotrope Lichtstreuung erzeugen und/oder ein aperiodisches Oberflächenprofil aufweisen.

10. Kettenglied nach einem der Ansprüche 1 bis 9, **dadurch gekennzeichnet, dass** die Datencode-Markierung (10; 20) mit dem 2D-Code, insbesondere einschließlich der sichtbaren Oberfläche der ersten und zweiten Symbolelemente (11, 12), einstückig aus demselben Kunststoff hergestellt ist wie der Kunststoffkörper (2A, 2B; 3A, 3B; 4).

11. Kettenglied nach einem der Ansprüche 1 bis 10, **dadurch gekennzeichnet, dass** die Datencode-Markierung (10; 20) mit dem 2D-Code werkzeugfallend, insbesondere als Direktmarkierung mit dem Spritzgussteil (2A, 2B; 3A, 3B; 4) im Spritzgießwerkzeug hergestellt, und ohne Nachbearbeitung maschinenlesbar ist.

12. Kettenglied nach einem der Ansprüche 1 bis 11, **dadurch gekennzeichnet, dass** die Datencode-Markierung (10; 20) eine Permanentmarkierung ist und die vom 2D-Code codierten Daten zumindest einen herstellerbezogenen URL- oder PURL-Identifikator umfassen; und/oder dass die vom 2D-Code codierten Daten verschlüsselte und/oder spritzgussteilspezifische Dateninhalte umfassen.

13. Kettenglied nach einem der Ansprüche 1 bis 12, **dadurch gekennzeichnet, dass** die zumindest eine Markierung weiterhin eine nutzerlesbare Markierung an der ersten Seite umfasst, insbesondere eine nutzerlesbare Zeitmarkierung die mittels einem Gießuhr-Markierstempel (8) im Spritzgussverfahren in den Kunststoffkörper eingebracht ist.

14. Kettenglied (1) einer Energieführungskette nach einem der Ansprüche 1 bis 13, wobei das mindestens ein Spritzgussteil (2A, 2B; 3A, 3B; 4) ein Seitenteil (2A, 2B; 3A, 3B) mit einer ersten Datencode-Markierung (10; 20) mit QR-Code ist sowie mindestens ein weiteres Spritzgussteil (2A, 2B; 3A, 3B; 4) ein Öffnungssteg (4) mit einer zweiten Datencode-Markierung (10; 20) mit QR-Code ist.

15. Kettenglied (1) nach einem der Ansprüche 1 bis 14, wobei das mindestens ein Spritzgussteil (2A, 2B; 3A, 3B; 4) aus einem faserverstärkten spritzgussfähigen Kunststoff hergestellt ist, insbesondere aus einem Kunststoff mit überwiegenden Gewichtsanteil Polyamid mit Verstärkungsfasern.

## Claims

1. A chain link (1) of an energy guiding chain including at least one plastic injection moulded part (2A, 2B; 3A, 3B; 4) , in particular a side part (2A, 2B; 3A, 3B), wherein the injection moulded part (2A, 2B; 3A, 3B; 4) is produced in the injection moulding method in the form of a one-piece plastic body from a plastic with a colouration that remains the same throughout, which has a first side, in particular an outside (6) of the side part (2A, 2B; 3A, 3B), having a first surface (13), and a second side, in particular an inside (5) of the side part (2A, 2B; 3A, 3B), and wherein there is provided at least one marking visible at the first side, **characterised in that**
the at least one marking includes a data code marking (10; 20) with a 2D code, namely a QR code, in particular in accordance with ISO/IEC 18004, which encodes data and
the data code marking with the QR code is introduced in the injection moulding method from a visually black plastic into the plastic body and is provided in machine-readable manner at the first side (6).

2. A chain link according to claim 1 **characterised in that** the 2D code is shaped or formed in one piece, in particular in material-unitary relationship, with the plastic body.

3. A chain link according to one of claims 1 to 2 **characterised in that** the 2D code (10;20) for encoding includes first symbol elements (11) and second symbol elements (12), wherein the first symbol elements have a different surface nature from the second symbol elements.

4. A chain link according to claim 3 **characterised in that** the first symbol elements (11) and the first surface (13) of the injection moulded part have the same surface nature and/or the second symbol elements (12) have a different surface profile from the first surface (13).

5. A chain link according to claim 3 or claim 4 **characterised in that** the first symbol elements (11) are of a lesser roughness depth than the second symbol elements (12), wherein the first symbol elements (11) in particular have an arithmetic mean roughness value Ra in the region of 0.5 to 3.5 µm, preferably in the region of 0.75 to 2.75 µm, and the second symbol elements (12) in particular have an arithmetic mean roughness value Ra, roughness depth, in the region of 5 to 12 µm, preferably in the region of 6.50 to 10.50 µm.

6. A chain link according to one of claims 3 to 5 **characterised in that** the first symbol elements (11) lie in level-plane relationship with the first surface (13) in a region adjoining the data code marking (10; 20).

7. A chain link according to one of claims 3 to 6 **characterised in that** the second symbol elements (12) are formed by regions projecting with respect to the surface (13) of the first side of the injection moulded part, wherein a difference in height between the first symbol elements (11) and the second symbol elements (12) is preferably less than 0.5 mm.

8. A chain link according to one of claims 3 to 6 **characterised in that** the data code marking (10; 20) is provided in a region (7) of the first side, that is recessed with respect to the first surface (13), and/or the second symbol element (12) is formed by regions recessed with respect to the surface (13) of the first side of the injection moulded part.

9. A chain link according to one of claims 3 to 8 **characterised in that** the second symbol elements (12) produce greater light scatter than the first symbol elements (11), preferably wherein the second symbol elements (12) produce substantially isotropic light scatter and/or have an aperiodic surface profile.

10. A chain link according to one of claims 1 to 9 **characterised in that** the data code marking (10; 20) with the 2D code, in particular including the visible surface of the first and second symbol elements (11, 12), is produced in one piece from the same plastic as the plastic body (2A, 2B; 3A, 3B; 4).

11. A chain link according to one of claims 1 to 10 **characterised in that** the data code marking (10; 20) with the 2D code is produced in off-tool fashion, in particular as a direct marking, with the injection moulded part (2A, 2B; 3A, 3B; 4) in the injection moulding tool and is machine-readable without re-working.

12. A chain link according to one of claims 1 to 11 **characterised in that** the data code marking (10; 20) is a permanent marking and the data encoded by the 2D code include at least one manufacturer-related URL or PURL identifier; and/or **in that** the data encoded by the 2D code include encrypted and/or injection moulded part-specific data contents.

13. A chain link according to one of claims 1 to 12 **characterised in that** the at least marking further includes a user-readable marking at the first side, in particular a user-readable time marking which is introduced into the plastic body in an injection moulding method by means of a casting clock marking punch (8).

14. A chain link (1) of an energy guiding chain according to at least one of claims 1 to 13, wherein the at least one injection moulded part (2A, 2B; 3A, 3B; 4) is a side part (2A, 2B; 3A, 3B) with a first data code marking (10; 20) with a QR code and at least one further injection moulded part (2A, 2B; 3A, 3B; 4) is an opening bar (14) with a second data code marking (10; 20) with a QR code.

15. A chain link (1) according to one of claims 1 to 14 wherein the at least one injection moulded part (2A, 2B; 3A, 3B; 4) is produced from a fibre-reinforced injection-mouldable plastic, in particular from a plastic with a predominant proportion by weight of polyamide with reinforcing fibres.

## Revendications

1. Maillon de chaîne (1) d'une chaîne de transport d'énergie comprenant au moins une pièce en matière plastique moulée par injection (2A, 2B; 3A, 3B; 4), en particulier une pièce latérale (2A, 2B; 3A, 3B), la pièce moulée par injection (2A, 2B; 3A, 3B; 4) étant fabriquée par moulage par injection sous la forme d'un corps en matière plastique d'une seule pièce en une matière plastique ayant une coloration constante continue, qui présente un premier côté, en particulier le côté extérieur (6) de la pièce latérale (2A, 2B; 3A, 3B), avec une première surface (13) et un deuxième côté, en particulier le côté intérieur (5) de la pièce latérale (2A, 2B; 3A, 3B); et
au moins un marquage étant prévu de manière visible sur le premier côté, **caractérisé**
**en ce que** ledit au moins un marquage comprend un marquage de code de données (10; 20) avec un code 2D, à savoir un code QR, en particulier un code QR selon ISO/IEC 18004, qui code des données, et
**en ce que** le marquage de code de données avec le code QR est introduit dans le corps en matière plastique par un procédé de moulage par injection à partir d'une matière plastique visuellement noire et est prévu sur le premier côté (6) de manière à pouvoir être lu par une machine.

2. Maillon de chaîne selon la revendication 1, **caractérisé en ce que** le code 2D est moulé ou formé d'une seule pièce, en particulier d'un seul matériau, avec le corps en matière plastique.

3. Maillon de chaîne selon l'une des revendications 1 à 2, **caractérisé en ce que** le code 2D (10; 20) comprend, pour le codage, des premiers éléments de symbole (11) et des deuxièmes éléments de symbole (12), les premiers éléments de symbole présentant un état de surface différent de celui des deuxièmes éléments de symbole.

4. Maillon de chaîne selon la revendication 3, **caractérisé en ce que** les premiers éléments de symbole (11) et la première surface (13) de la pièce moulée par injection présentent le même état de surface et/ou les deuxièmes éléments de symbole (12) présentent un profil de surface différent de celui de la première surface (13).

5. Maillon de chaîne selon la revendication 3 ou 4, **caractérisé en ce que** les premiers éléments de symbole (11) présentent une profondeur de rugosité inférieure à celle des deuxièmes éléments de symbole (12), les premiers éléments de symbole (11) présentant en particulier une rugosité moyenne arithmétique Ra dans la plage de 0,5-3,5 µm, de préférence dans la plage de 0,75-2,75 µm, et les deuxièmes éléments de symbole (12) présentant en particulier une rugosité moyenne arithmétique Ma, profondeur de rugosité dans la plage de 5-12 µm, de préférence dans la plage de 6,50-10,50 µm.

6. Maillon de chaîne selon l'une des revendications 3 à 5, **caractérisé en ce que** les premiers éléments de symbole (11) sont à plat avec la première surface (13) dans une zone adjacente au marquage de code de données (10; 20).

7. Maillon de chaîne selon l'une des revendications 3 à 6, **caractérisé en ce que** les deuxièmes éléments de symbole (12) sont formés par des zones en saillie par rapport à la surface (13) du premier côté de la pièce moulée par injection, une différence de hauteur entre les premiers éléments de symbole (11) et les deuxièmes éléments de symbole (12) étant de préférence inférieure à 0,5 mm.

8. Maillon de chaîne selon l'une des revendications 3 à 6, **caractérisé en ce que** le marquage de code de données (10; 20) est prévu dans une zone (7) du premier côté en creux par rapport à la première surface et/ou les deuxièmes éléments de symbole (12) sont formés par des zones en creux par rapport à la surface (13) du premier côté de la pièce moulée par injection.

9. Maillon de chaîne selon l'une quelconque des revendications 3 à 8, **caractérisé en ce que** les deuxièmes éléments de symbole (12) provoquent une diffusion de lumière plus importante que les premiers éléments de symbole (11); de préférence dans lequel les deuxièmes éléments de symbole (12) produisent une diffusion de lumière essentiellement isotrope et/ou présentent un profil de surface apériodique.

10. Maillon de chaîne selon l'une quelconque des revendications 1 à 9, **caractérisé en ce que** le marquage de code de données (10; 20) avec le code 2D, y compris notamment la surface visible des premier et deuxième éléments de symbole (11, 12), est réalisé d'un seul tenant dans la même matière plastique que le corps en matière plastique (2A, 2B; 3A, 3B; 4).

11. Maillon de chaîne selon l'une des revendications 1 à 10, **caractérisé en ce que** le marquage de code de données (10; 20) avec le code 2D est fabriqué de manière hors outil, en particulier comme marquage direct avec la pièce moulée par injection (2A, 2B; 3A, 3B; 4) dans l'outil de moulage par injection et peut être lu par la machine sans traitement ultérieur.

12. Maillon de chaîne selon l'une des revendications 1 à 11, **caractérisé en ce que** le marquage de code de données (10; 20) est un marquage permanent et les données codées par le code 2D comprennent au moins un identifiant URL ou PURL lié au fabricant; et/ou **en ce que** les données codées par le code 2D comprennent des contenus de données codés et/ou spécifiques aux pièces moulées par injection.

13. Maillon de chaîne selon l'une quelconque des revendications 1 à 12, **caractérisé en ce que** ledit au moins un marquage comprend en outre un marquage lisible par l'utilisateur sur le premier côté, en particulier un marquage lisible par l'utilisateur, qui est introduit dans le corps en matière plastique au moyen d'un poinçon de marquage d'horloge de coulée (8) dans le procédé de moulage par injection.

14. Maillon de chaîne (1) d'une chaîne de transport d'énergie selon l'une des revendications 1 à 13, dans lequel ladite au moins une pièce moulée par injection (2A, 2B; 3A, 3B; 4) est une pièce latérale (2A, 2B; 3A, 3B) avec un premier marquage de code de données (10; 20) avec un code QR, ainsi qu'au moins une autre pièce moulée par injection (2A, 2B; 3A, 3B; 4) est une traverse d'ouverture (4) avec un deuxième marquage de code de données (10; 20) avec un code QR.

15. Maillon de chaîne (1) selon l'une quelconque des revendications 1 à 14, dans lequel l'au moins une pièce moulée par injection (2A, 2B; 3A, 3B; 4) est fabriquée à partir d'une matière plastique moulable par injection renforcée par des fibres, en particulier à partir d'une matière plastique comprenant une part prépondérante en poids de polyamide avec des fibres de renforcement.
